# EUROPEAN PATENT SPECIFICATION

(11) **EP 3 025 886 B1**
(45) Date of publication and mention of the grant of the patent: **23.05.2018**
(21) Application number: 14830183.1
(22) Date of filing: 23.07.2014
(51) Int. Cl.: B60H 1/22, B60H 1/08, B60H 1/32, F25B 49/02

(54) **AIR CONDITIONING DEVICE FOR VEHICLE**
KLIMAANLAGENSYSTEM FÜR EIN FAHRZEUG
DISPOSITIF DE CLIMATISATION POUR VÉHICULE

(30) Priority: 26.07.2013 JP 2013155185
(43) Date of publication of application: 01.06.2016
(73) Proprietor: Panasonic Intellectual Property Management Co., Ltd., Osaka-shi, Osaka 540-6207 (JP)
(72) Inventor: KODERA, Yuji, Osaka 540-6207 (JP); KURODA, Kentaro, Osaka 540-6207 (JP); TANIGUCHI, Katsuji, Osaka 540-6207 (JP); TERADA, Tomohiro, Osaka 540-6207 (JP); NODA, Yoshitoshi, Osaka 540-6207 (JP)
(74) Representative: Schwabe - Sandmair - Marx
(86) International application number: PCT/JP2014/003868
(87) International publication number: WO 2015/011920

(56) References cited:
- DE-A1- 10 239 876
- JP-A- H1 134 640
- JP-A- S6 189 115
- JP-A- 2003 118 355
- JP-A- 2004 017 681
- JP-A- 2005 043 008
- JP-A- 2007 024 470
- JP-A- 2010 159 008
- JP-A- 2011 240 777

## Description

### TECHNICAL FIELD

The present disclosure relates to an air conditioning device for vehicle.

### BACKGROUND

An air conditioning device for vehicle which adjusts air-conditioning in a vehicle needs to perform control such that a suction pressure of a compressor does not become a negative pressure in driving of the compressor which compresses and discharges a refrigerant. This is because, when the suction pressure of the compressor becomes the negative pressure, air enters a refrigerant pipe, a low-temperature refrigerant freezes moisture in air and the frozen moisture causes troubles such as damages of the compressor and jamming in a cycle.

Countermeasures for these troubles include that a pressure sensor measures a pressure at a suction side (see PTL 1) or a predetermined standby time is provided after an engine is driven and then a compressor is driven (see PTL 2).

### Citation List

### Patent Literatures

PTL 1: Unexamined Japanese Patent Publication No. 2003-267039
PTL 2: Unexamined Japanese Patent Publication No. 2000-142094

JP 2010-159008 A discloses an air conditioner comprising a heat exchange means for water including heat exchangers for water to circulate the engine cooling water to circulate the engine cooling water between a water jacket and a heater core. A second external heat exchanger is provided so that the engine cooling water in the heat exchangers for water can be heated. This air conditioner further includes a second electromagnetic change over means for switching a first flow from a first external heat exchanger to a first expansion means or a pressure reduction means site, a second flow from the second external heat exchanger to a final external heat exchange means and a third flow from the second external heat exchanger to the first expansion means or the pressure reduction means site.

### SUMMARY

### TECHNICAL PROBLEM

However, a technique disclosed in PTL 1 has a problem that the pressure sensor is additionally provided at the suction side of the compressor and therefore the cost increases. Further, the technique disclosed in PTL 2 has a problem that a timing to turn on the compressor is different depending on an amount of heat generation of an engine, and therefore it is difficult to set a predetermined time to turn off the compressor and it is not possible to take an efficient countermeasure for a negative pressure.

The present disclosure provides an air conditioning device for vehicle which suppresses an increase in cost and takes an efficient countermeasure for a negative pressure.

### SOLUTION TO PROBLEM

The invention is defined by independent claim 1, whereas the dependent claims are directed to advantageous embodiments.

An air conditioning device for vehicle according to the present disclosure employs a configuration including: a first water-refrigerant heat exchanger which performs a heat exchange between a coolant and a low-temperature and low-pressure refrigerant, and vaporizes the refrigerant; a compressor which compresses the refrigerant fed from the first water-refrigerant heat exchanger, to a high-temperature and high-pressure refrigerant, and discharges the refrigerant; a heater core which heats an interior of a vehicle by using heat of the high-temperature and high-pressure refrigerant discharged by a compressor; a temperature sensor which detects a temperature of the coolant circulating in the first water-refrigerant heat exchanger and a cooling path of a heat generating component of the vehicle, the temperature being detected when the coolant flows in the first water-refrigerant heat exchanger; and a controller which determines whether or not to permit driving of the compressor, based on the temperature detected by the temperature sensor.

### ADVANTAGEOUS EFFECT

A temperature sensor which detects a temperature of a coolant is generally provided to cool a heat generating component of a vehicle by using the coolant. According to the present disclosure, it is possible to suppress an increase in cost by using this temperature sensor, and take an efficient measure for a negative pressure.

### BRIEF DESCRIPTION OF DRAWINGS

FIG. 1 is a configuration diagram of an air conditioning device for vehicle according to a first exemplary embodiment of the present disclosure.
FIG. 2 is a diagram for illustrating an operation of a heat pump heating mode.
FIG. 3 is a diagram for illustrating an operation of a cooling mode.
FIG. 4 is a block diagram illustrating part of components of the air conditioning device for vehicle.
FIG. 5 is a flowchart illustrating an operation process of an air conditioning controller.
FIG. 6 is a flowchart illustrating a process of driving determination control of the air conditioning controller illustrated in FIG. 5.
FIG. 7 is a flowchart illustrating another process of driving determination control of the air conditioning controller illustrated in FIG. 5.
FIG. 8 is a flowchart illustrating a process of normal driving determination control of the air conditioning controller illustrated in FIG. 5.
FIG. 9 is a flowchart illustrating a process of refrigerant state determination control illustrated in FIG. 8.
FIG. 10 is a diagram for illustrating stagnation-resolving control processing according to a second exemplary embodiment of the present disclosure.
FIG. 11 is a diagram for illustrating stagnation-resolving control processing according to the second exemplary embodiment of the present disclosure.

### DESCRIPTION OF EMBODIMENTS

Exemplary embodiments of the present disclosure will be described below in detail with reference to the drawings.

### FIRST EXEMPLARY EMBODIMENT

### <Configuration of Air Conditioning Device for Vehicle>

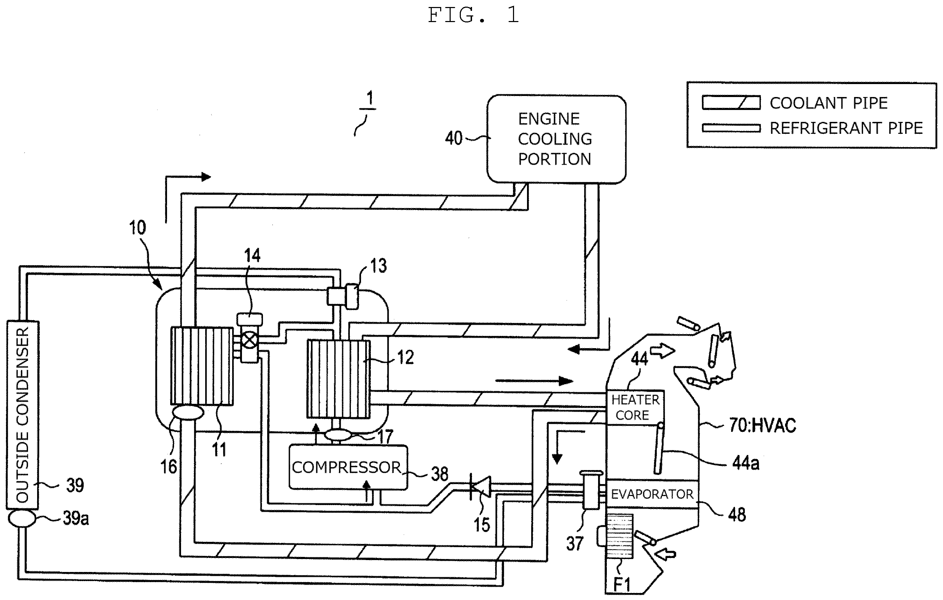

FIG. 1 is a configuration diagram of the air conditioning device for vehicle according to the first exemplary embodiment of the present disclosure.

Air conditioning device for vehicle 1 according to the first exemplary embodiment of the present disclosure is a device which is mounted on a vehicle including an engine (internal combustion engine) as a heat generating component, and adjusts air-conditioning in the vehicle.

Air conditioning device for vehicle 1 according to the exemplary embodiment includes constituent unit 10, compressor (compressing machine) 38, engine cooling portion 40, heater core 44, evaporator 48, expansion valve 37, outside condenser 39, check valve 15, coolant pipes which connect these components, and a refrigerant pipe. Heater core 44 and evaporator 48 are disposed in a suction air path of HVAC (Heating, Ventilation, and Air Conditioning) 70. HVAC 70 is provided with fan F1 which causes a suction air to flow.

Compressor 38 is driven by power of an engine or electricity, and compresses a suctioned refrigerant to a high-temperature and high-pressure refrigerant and discharges the refrigerant. The compressed refrigerant is fed to constituent unit 10. Compressor 38 suctions a low-pressure refrigerant through a junction pipe from evaporator 48 or first water-refrigerant heat exchanger 11 of constituent unit 10.

Engine cooling portion 40 includes a water jacket which causes a coolant to flow in surroundings of the engine, and a pump which causes the coolant to flow in the water jacket, and releases heat from the engine to the coolant flowing to the water jacket. The pump is rotated by, for example, power of the engine. Engine cooling portion 40 may include a radiator which releases heat to outside air when the amount of heat exhausted from the engine is large. A coolant path of engine cooling portion 40 passes through constituent unit 10 and is connected to heater core 44.

The coolant is, for example, an antifreeze liquid such as an LLC (Long Life Coolant) and is a liquid for heat transportation.

A configuration of transporting the coolant may include only the pump of engine cooling portion 40. Consequently, it is possible to reduce the cost of the air conditioning device and reduce an installation space for the air conditioning device. To enhance performance of transporting the coolant, a pump may be added to another portion of the coolant pipe.

Heater core 44 is a device which performs a heat exchange between a coolant and air, and is disposed in a suction air path of HVAC 70 which supplies air to the interior of the vehicle. Heater core 44 receives a supply of the heated coolant, and releases heat to a suction air fed to the interior of the vehicle (an air-blast to the interior of the vehicle) in a heating operation. Heater core 44 can adjust the amount of air which passes according to an opening of door 44a. Door 44a can be electrically controlled to open and close. Door 44a is also referred to as an air mix door.

Evaporator 48 is a device which performs a heat exchange between a low-temperature and low-pressure refrigerant and air, and is disposed in the suction air path of HVAC 70. Evaporator 48 receives a flow of a low-temperature and low-pressure refrigerant in a cooling operation or a dehumidifying operation, and cools suction air supplied to the interior of the vehicle (an air-blast to the interior of the vehicle).

Expansion valve 37 expands a high-pressure refrigerant to a low-temperature and low-pressure refrigerant, and discharges the refrigerant to evaporator 48. Expansion valve 37 is disposed close to evaporator 48. Expansion valve 37 may have a function of automatically adjusting the amount of refrigerant to discharge according to a temperature of a refrigerant fed from evaporator 48.

Outside condenser 39 includes a path in which a refrigerant flows and a path in which air flows, is disposed at a head of the vehicle in an engine room and performs a heat exchange between the refrigerant and outside air. Outside condenser 39 receives a flow of a high-temperature and high-pressure refrigerant in the cooling mode and the dehumidifying mode, and exhausts heat from the refrigerant to outside air. Outside air is blown to outside condenser 39 by, for example, a fan. Reservoir tank 39a may be provided at a side of outside condenser 39 from which the refrigerant is fed.

Constituent unit 10 is an integrated component which is manufactured as a single unit at a factory, and is connected with other components of air conditioning device for vehicle 1 by pipes in a vehicle assembly process. In constituent unit 10, each component may be housed in one housing and integrated or each component may be integrated by being jointed.

Constituent unit 10 includes first water-refrigerant heat exchanger 11, second water-refrigerant heat exchanger 12, ON-OFF valve (corresponding to first switch) 13, and solenoid valve equipped expansion valve (corresponding to a second switch, an expansion valve having ON-OFF function) 14.

First water-refrigerant heat exchanger 11 (evaporator) includes a path in which the low-temperature and low-pressure refrigerant flows and a path in which a coolant flows, and performs heat exchange between the refrigerant and the coolant. In first water-refrigerant heat exchanger 11, solenoid valve equipped expansion valve 14 discharges the low-temperature and low-pressure refrigerant in a predetermined operation mode to transfer heat from the coolant to the low-temperature and low-pressure refrigerant. Thus, first water-refrigerant heat exchanger 11 vaporizes the low-temperature and low-pressure refrigerant.

A coolant inlet of first water-refrigerant heat exchanger 11 is connected to heater core 44 through a pipe, and a coolant outlet is connected to engine cooling portion 40 through a pipe. The refrigerant inlet of first water-refrigerant heat exchanger 11 is connected to solenoid valve equipped expansion valve 14 through a pipe, and the refrigerant outlet is connected to a pipe which joins a suction port of compressor 38.

Second water-refrigerant heat exchanger 12 (condenser) includes a path in which the high-temperature and high-pressure refrigerant flows and a path in which a coolant flows, and performs a heat exchange between the refrigerant and the coolant. Second water-refrigerant heat exchanger 12 receives a flow of the high-temperature and high-pressure refrigerant fed from compressor 38 in a predetermined operation mode, and exhausts heat to the coolant from the high-temperature and high-pressure refrigerant. Thus, second water-refrigerant heat exchanger 12 condenses the high-temperature and high-pressure refrigerant.

A coolant inlet of second water-refrigerant heat exchanger 12 is connected to engine cooling portion 40 through a pipe, and a coolant outlet is connected to heater core 44 through a pipe. The refrigerant inlet of second water-refrigerant heat exchanger 12 is connected to a discharge port of compressor 38 through a pipe, and the refrigerant outlet is connected to ON-OFF valve 13 and solenoid valve equipped expansion valve 14 through a branching pipe.

ON-OFF valve 13 is a valve which is, for example, electrically controlled to open and close a refrigerant pipe. ON-OFF valve 13 is, for example, a solenoid valve.

Solenoid valve equipped expansion valve 14 is a valve which is, for example, electrically controlled to switch to open or close the refrigerant pipe, and functions as an expansion valve when the refrigerant pipe is opened. Solenoid valve equipped expansion valve 14 may be a thermal expansion valve (TXV) which automatically adjusts a refrigerant flow rate based on a refrigerant temperature of the refrigerant outlet of first water-refrigerant heat exchanger 11 when functioning as the expansion valve.

Check valve 15 is a valve which is provided between compressor 38 and evaporator 48, and prevents a reverse flow of the refrigerant in an operation mode in which the refrigerant does not flow to outside condenser 39 and evaporator 48. In this regard, an operation mode in which ON-OFF valve 13 is closed and the refrigerant flows to a refrigerant circuit which passes through first water-refrigerant heat exchanger 11 and second water-refrigerant heat exchanger 12 will be considered. In this operation mode, ON-OFF valve 13 is closed, and therefore the refrigerant circuit passing through outside condenser 39 and evaporator 48 is interrupted. However, even in this case, when the temperature of outside air is low, a refrigerant pressure in outside condenser 39 and evaporator 48 lowers in some cases. Further, when the pressure lowers in this way, the refrigerant flowing to the refrigerant circuit of first water-refrigerant heat exchanger 11 and second water-refrigerant heat exchanger 12 reversely flows to the refrigerant circuit at a side of evaporator 48. As a result, the amount of refrigerant in the refrigerant circuit passing through first water-refrigerant heat exchanger 11 and second water-refrigerant heat exchanger 12 deviates from an optimal range, and efficiency of this heat pump cycle lowers. However, check valve 15 is provided, so that it is possible to avoid such inconvenience.

Temperature sensor 16 is provided on a coolant path through which a coolant is guided to first water-refrigerant heat exchanger 11, and detects a temperature of the coolant guided to first water-refrigerant heat exchanger 11. In this regard, even when temperature sensor 16 is provided at any position of the coolant path, it is possible to provide the effect of the present exemplary embodiment. In addition, air conditioning device for vehicle 1 which cools a heat generating component of the vehicle by using a coolant generally includes temperature sensor 16.

Discharge pressure sensor 17 is provided on a discharge-side refrigerant pipe of compressor 38, and detects a pressure of a refrigerant discharged from compressor 38. In addition, discharge pressure sensor 17 is preferably disposed near a discharge port of compressor 38. However, discharge pressure sensor 17 does not need to be disposed near the discharge port of compressor 38 as long as a pressure of a refrigerant at the discharge side of compressor 38. For example, it is also possible to provide it on a pipe for a refrigerant fed from second water-refrigerant heat exchanger 12.

### <Operation of Air Conditioning Device for Vehicle>

Next, an operation of air conditioning device for vehicle 1 will be described.

Air conditioning device for vehicle 1 operates by being switched to some operation modes such as a hot water heating mode, a heat pump heating mode, a temperature adjusting mode, and a cooling mode. The hot water heating mode is a mode of heating the interior of the vehicle without operating the heat pump. The heat pump heating mode is a mode of heating the interior of the vehicle by operating the heat pump. The cooling mode is a mode of cooling the interior of the vehicle by an operation of the heat pump. A temperature adjusting mode is a mode of adjusting the temperature and the humidity of air by optionally cooling and dehumidifying air by using the low-temperature refrigerant, and heating air by using the high-temperature coolant. The heat pump heating mode and the cooling mode will be described below as typical examples.

### [Heat Pump Heating Mode]

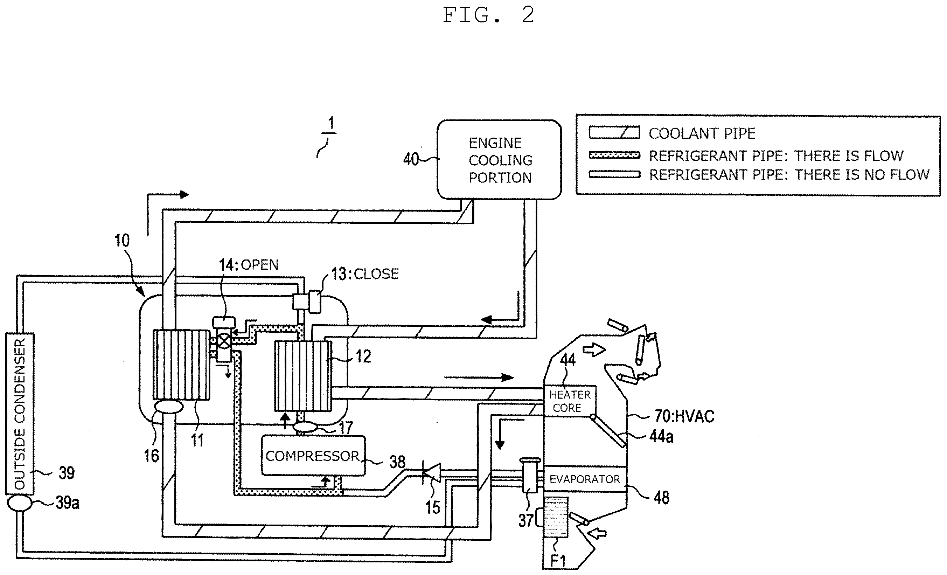

FIG. 2 is a diagram for illustrating an operation of a heat pump heating mode.

In the heat pump heating mode, as illustrated in FIG. 2, ON-OFF valve 13 is switched to close, and solenoid valve equipped expansion valve 14 is switched to open (thermal expansion valve operation). Further, door 44a of heater core 44 is opened (fully opened, for example).

In the heat pump heating mode, when compressor 38 further operates, the refrigerant circulates in order of second water-refrigerant heat exchanger 12, solenoid valve equipped expansion valve 14, first water-refrigerant heat exchanger 11, and compressor 38.

In this regard, the high-temperature and high-pressure refrigerant compressed by compressor 38 releases heat to the coolant in second water-refrigerant heat exchanger 12 and the refrigerant condenses. The condensed refrigerant is expanded to the low-temperature and low-pressure refrigerant by solenoid valve equipped expansion valve 14, and is fed to first water-refrigerant heat exchanger 11. The low-temperature and low-pressure refrigerant absorbs heat from the coolant in first water-refrigerant heat exchanger 11 and the refrigerant vaporizes. The vaporized low-pressure refrigerant is suctioned and is compressed by compressor 38.

The coolant circulates in order of engine cooling portion 40, second water-refrigerant heat exchanger 12, heater core 44, and first water-refrigerant heat exchanger 11.

In this regard, the coolant having heat absorbed from the engine in engine cooling portion 40 is further heated by second water-refrigerant heat exchanger 12 and is fed to heater core 44. In heater core 44, the coolant whose temperature has become high can sufficiently heat suction air fed to the interior of the vehicle.

The coolant having passed through heater core 44 has a higher temperature than outside air, and can release heat to the refrigerant and vaporizes the refrigerant in first water-refrigerant heat exchanger 11. The coolant having been cooled by first water-refrigerant heat exchanger 11 is fed to engine cooling portion 40 and can sufficiently cool the engine.

With this operation, it is possible to sufficiently warm the interior of the vehicle.

### [Cooling Mode]

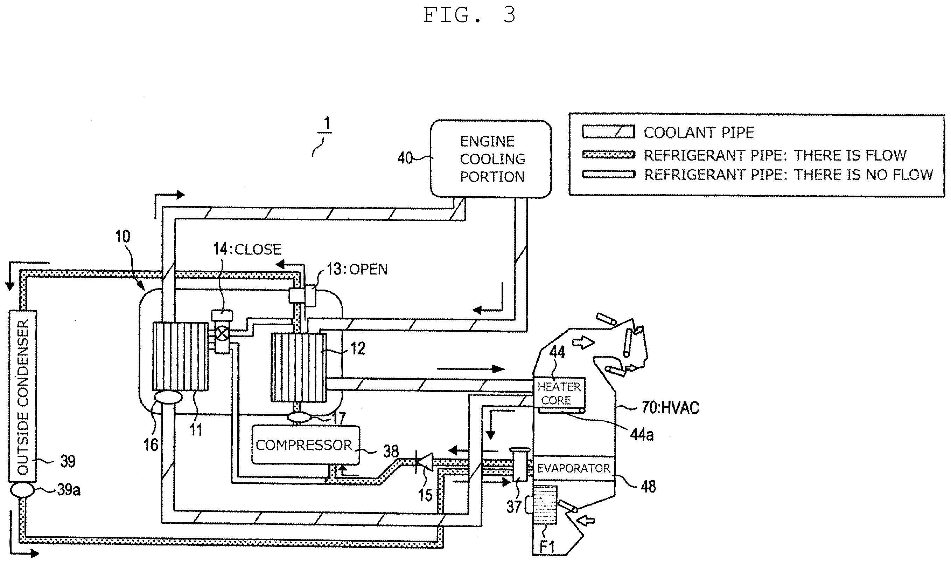

FIG. 3 is a diagram for illustrating an operation of the cooling mode.

In the cooling mode, as illustrated in FIG. 3, ON-OFF valve 13 is switched to open and solenoid valve equipped expansion valve 14 is switched to close. Further, door 44a of heater core 44 is fully closed.

In the cooling mode, when compressor 38 further operates, the refrigerant circulates in order of second water-refrigerant heat exchanger 12, outside condenser 39, expansion valve 37, evaporator 48, and compressor 38.

The coolant flows in engine cooling portion 40, second water-refrigerant heat exchanger 12, heater core 44, and first water-refrigerant heat exchanger 11. The coolant is not cooled in first water-refrigerant heat exchanger 11, and therefore has a relatively higher temperature. Heat is released from the coolant mainly by a radiator of engine cooling portion 40. The temperature of the engine becomes very high, and therefore even when an outside air temperature is high, it is possible to adequately cool the interior of the vehicle by heat release from the radiator. In this regard, a configuration of causing the coolant to flow may make a more coolant flow than to heater core 44 by lowering a coolant flow to heater core 44.

The high-temperature and high-pressure refrigerant compressed by compressor 38 hardly releases heat in second water-refrigerant heat exchanger 12 since a temperature of the coolant in second water-refrigerant heat exchanger 12 is high. The high-temperature and high-pressure refrigerant is then fed to outside condenser 39, is released to air, and condenses.

The condensed refrigerant is fed to evaporator 48. The refrigerant, at first, expands at expansion valve 37 to become a low-temperature and low-pressure refrigerant, and then cools an air-blast to the interior of the vehicle at evaporator 48. The refrigerant is vaporized by this heat exchange. The vaporized low-pressure refrigerant is suctioned and is compressed by compressor 38.

With this operation, it is possible to sufficiently cool the interior of the vehicle.

When a heat pump operation is performed while the amount of refrigerant is small, cooling and heating performance lowers. Hence, it is necessary to detect leakage of the refrigerant. A case where air conditioning device for vehicle 1 detects leakage of the refrigerant in the heat pump operation will be described below.

### <Main Function Block of Air Conditioning Device for Vehicle>

Next, the main function block of air conditioning device for vehicle 1 according to the exemplary embodiment will be described.

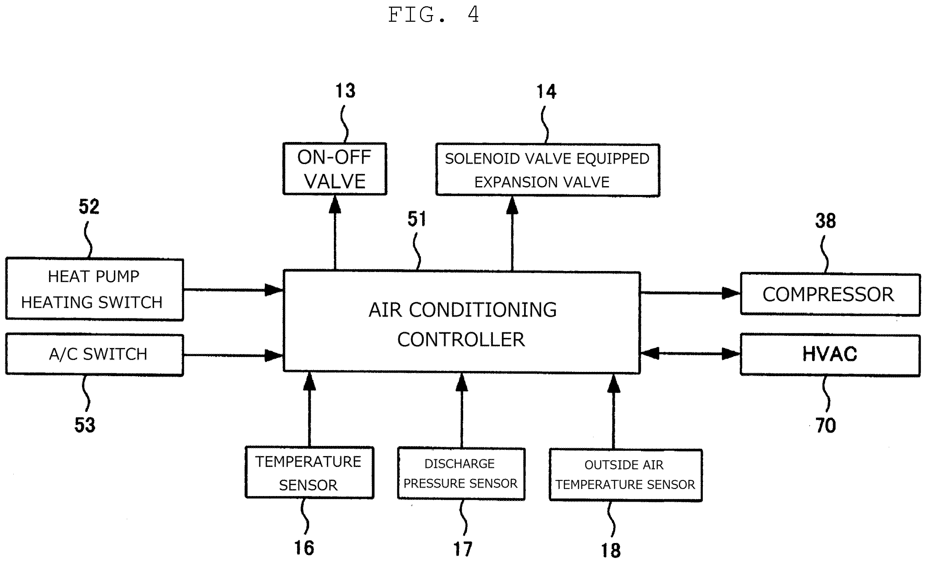

FIG. 4 is a block diagram illustrating part of components of the air conditioning device for vehicle.

ON-OFF valve 13 switches to open or close the refrigerant pipe under control of air conditioning controller 51. Further, solenoid valve equipped expansion valve 14 is a valve which is switched to open or close the refrigerant pipe under control of air conditioning controller 51, and functions as an expansion valve when the refrigerant pipe is switched to open.

Temperature sensor 16 detects a temperature of a coolant guided to first water-refrigerant heat exchanger 11, and notifies air conditioning controller 51 of the detected temperature of the coolant.

Discharge pressure sensor 17 detects a pressure of the refrigerant discharged from compressor 38, and notifies air conditioning controller 51 of the detected discharge pressure.

Outside air temperature sensor 18 detects an outside air temperature, and notifies air conditioning controller 51 of the detected outside air temperature.

Compressor 38 is driven by power of an engine or electricity under control of air conditioning controller 51, and compresses a suctioned refrigerant to a high-temperature and high-pressure refrigerant and discharges the refrigerant.

Air conditioning controller 51 performs normal driving determination control based on the coolant temperature notified from temperature sensor 16 and the discharge pressure of the refrigerant notified from discharge pressure sensor 17. The normal driving determination control refers to control of avoiding that compressor 38 is driven when a negative pressure is produced, and control of avoiding that compressor 38 is abnormally driven by detecting leakage of the refrigerant.

Heat pump heating switch 52 is an operation switch which can be operated by a user. Air conditioning controller 51 can determine that it is necessary to make a transition to the heat pump heating mode in the case where heat pump heating switch 52 has been operated to switch to ON.

A/C (air conditioning) switch 53 is an operation switch which can be operated by the user, and is a switch which gives an instruction to activate the heat pump for cooling or dehumidifying. Air conditioning controller 51 can determine that it is necessary to make a transition to the cooling mode or the temperature adjusting mode in the case where A/C switch 53 has been operated to switch to ON.

HVAC 70 is disposed at a vehicle interior side of a partition wall (firewall) which partitions an engine room and the interior of the vehicle, and is not illustrated. Further, HVAC 70 includes air-blast fan F1, evaporator 48 and heater core 44 which are disposed in order from an upstream side to a downstream side in an air-blast path of this fan F1, and door 44a. Furthermore, HVAC 70 adjusts air-conditioning of the interior of the vehicle by causing evaporator 48 and heater core 44 to blow air whose temperature has been adjusted, to the interior of the vehicle. HVAC 70 obtains an air conditioning control signal from air conditioning controller 51, and controls an opening of door 44a and a number of times of rotations of fan F1 according to the air conditioning control signal.

### <Operation of Air Conditioning Device for Vehicle>

Next, an operation of air conditioning controller 51 will be described.

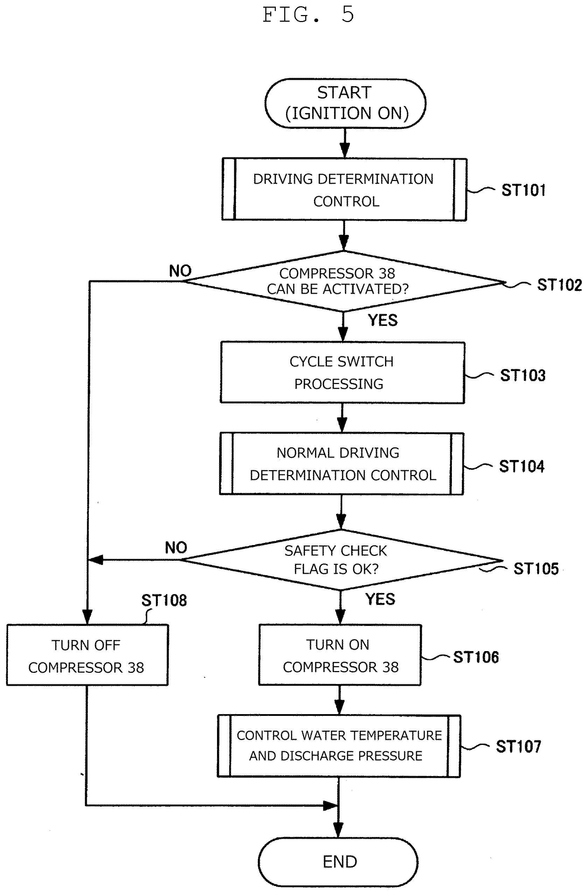

FIG. 5 is a flowchart illustrating an operation process of an air conditioning controller. In addition, the process from a start to an end illustrated in FIG. 5 is repeated at a certain cycle such as a cycle of 500 ms.

Air conditioning controller 51 starts operating when an ignition of the vehicle is turned on, and performs driving determination control of determining which one of the cooling refrigerant circuit and the heating refrigerant circuit is used (step ST101).

Air conditioning controller 51 determines whether or not compressor 38 can be activated (step ST102), and when compressor 38 can be activated (step ST102: YES), air conditioning controller 51 performs cycle switch processing of switching the refrigerant circuit to one of the cooling refrigerant circuit and the heating refrigerant circuit (step ST103).

Air conditioning controller 51 performs the normal driving determination control (step ST104), and determines whether or not a safety check flag is OK (step ST105).

When the safety check flag is OK (step ST105: YES), air conditioning controller 51 turns on compressor 38 (step ST106), controls a water temperature and a discharge pressure (step ST107) and finishes the operation. In step ST107, air conditioning controller 51 performs control of maintaining a coolant at a predetermined temperature (e.g. 60°C to 65°C), and performs control of keeping the discharge pressure at a predetermined pressure (e.g. 3.0 [MPa]) or less.

When determining in step ST102 that compressor 38 cannot be activated (step ST102: NO) and when determining in step ST105 that the safety check flag is NG (step ST105: NO), air conditioning controller 51 turns off compressor 38 and finishes the operation.

### <Driving Determination Control>

Next, the above-described driving determination control of air conditioning controller 51 will be described.

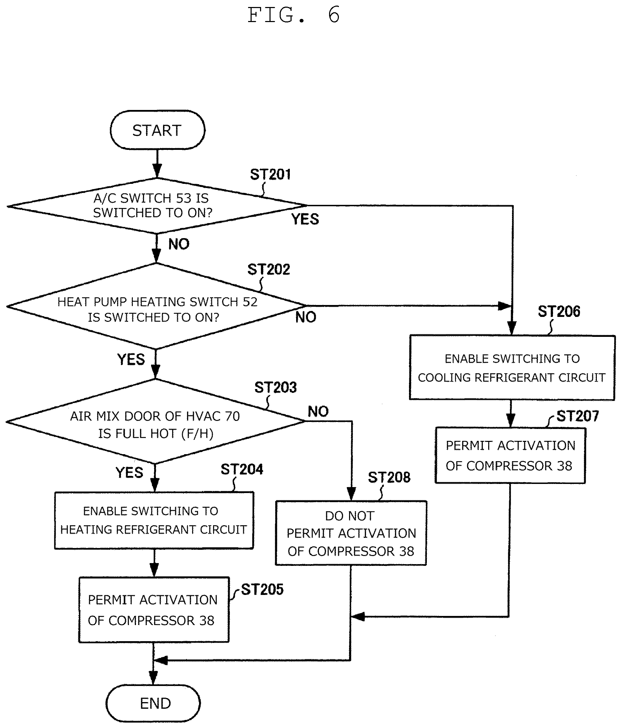

FIG. 6 is a flowchart illustrating a process of the driving determination control of the air conditioning controller illustrated in FIG. 5.

Air conditioning controller 51 determines whether or not A/C switch 53 has been operated to switch to ON (step ST201) and, in the case where A/C switch 53 has not been operated to switch to ON (step ST201: NO), air conditioning controller 51 determines whether or not heat pump heating switch 52 has been operated to switch to ON (step ST202).

In the case where heat pump heating switch 52 has been operated to switch to ON (step ST202: YES), air conditioning controller 51 determines whether or not the air mix door of HVAC 70 is full hot (F/H) (step ST203).

When the air mix door of HVAC 70 is full hot (step ST203: YES), the interior of the vehicle needs to be warmed at maximum, and therefore air conditioning controller 51 enables switching to the heating refrigerant circuit (step ST204), permits activation of compressor 38 (step ST205), and finishes the driving determination control.

In the case where A/C switch 53 has been operated to switch to ON in step ST201 (step ST201: YES), and in the case where heat pump heating switch 52 has not been operated to switch to ON in step ST202 (step ST202: NO), air conditioning controller 51 enables switching to the cooling refrigerant circuit (step ST206), permits activation of compressor 38 (step ST207), and finishes the driving determination control.

When the air mix door of HVAC 70 is not full hot in step ST203 (step ST203: NO), air conditioning controller 51 does not permit activation of compressor 38 (step ST208), and finishes the driving determination control.

### <Another Process of Driving Determination control>

Next, another process of the above-described driving determination control of air conditioning controller 51 will be described.

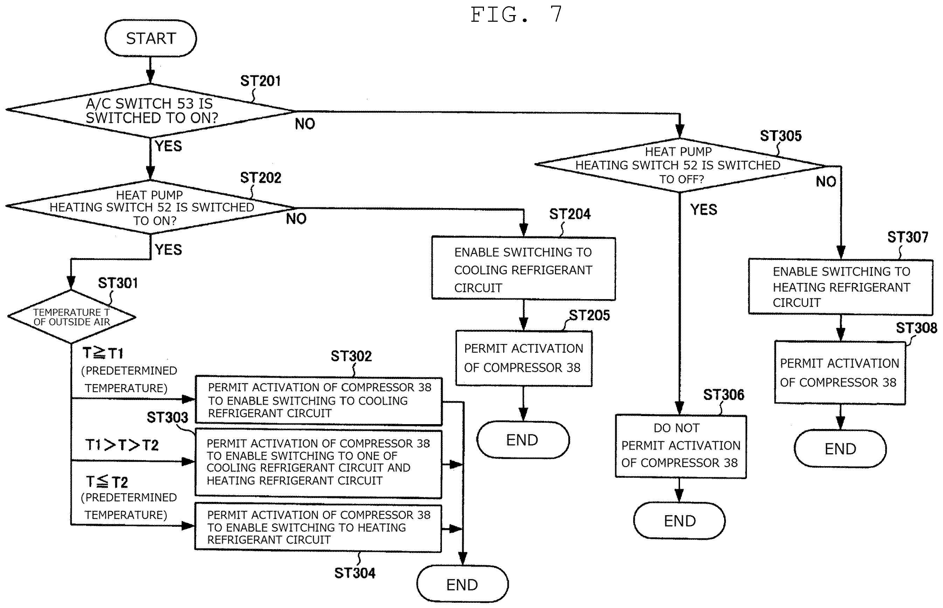

FIG. 7 is a flowchart illustrating another process of the driving determination control of the air conditioning controller illustrated in FIG. 5.

In the case where heat pump heating switch 52 has been operated to switch to ON in step ST202 (step ST202: YES), air conditioning controller 51 obtains outside air temperature T from outside air temperature sensor 18, and performs threshold determination on outdoor temperature T (step ST301).

When outside air temperature T is predetermined temperature T1 or more (T ≥ T1), air conditioning controller 51 enables switching to the cooling refrigerant circuit, permits activation of compressor 38 (step ST302), and finishes the driving determination control.

Further, when outside air temperature T is less than predetermined temperature T1 and is higher than predetermined temperature T2 (T2 < T1) (T1 > T > T2), air conditioning controller 51 enables switching to one of the cooling refrigerant circuit and the heating refrigerant circuit, and permits activation of compressor 38 (step ST303).

Furthermore, when outside air temperature T is predetermined temperature T2 or less (T ≤ T2), air conditioning controller 51 enables switching to the heating refrigerant circuit and permits the activation of compressor 38 (step ST304).

In the case where A/C switch 53 has not been operated to switch to ON in step ST201 (step ST201: NO), air conditioning controller 51 determines whether or not heat pump heating switch 52 has been operated to switch to OFF (step ST305).

In the case where heat pump heating switch 52 has been operated to switch to OFF (step ST305: YES), air conditioning controller 51 does not permit the activation of compressor 38 (step ST306).

Meanwhile, in the case where heat pump heating switch 52 has not been operated to switch to OFF (step ST305: NO), air conditioning controller 51 enables switching to the heating refrigerant circuit (step ST307), and permits the activation of compressor 38 (step ST308).

### <Normal Driving Determination Control>

Next, the above-described normal driving determination control of air conditioning controller 51 will be described.

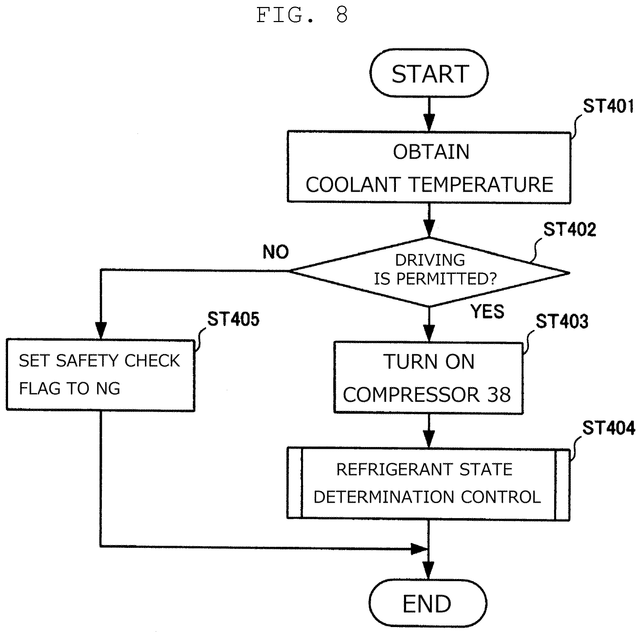

FIG. 8 is a flowchart illustrating a process of the normal driving determination control of the air conditioning controller illustrated in FIG. 5.

Air conditioning controller 51 obtains a coolant temperature from temperature sensor 16 (step ST401), and determines whether or not to permit driving of compressor 38 based on the obtained coolant temperature (step ST402). In this case, air conditioning controller 51 permits driving of compressor 38 at such a coolant temperature that the suction pressure of compressor 38 does not become a negative pressure. Further, a hysteresis is provided such that permission of driving is not frequently made or non-permission of driving is not frequently made at around a coolant temperature at which driving of compressor 38 is permitted. The hysteresis is provided, so that air conditioning controller 51 permits driving at T2 °C of the coolant temperature and does not permit driving at T1 °C (< T2 °C).

When driving of compressor 38 is permitted (step ST402: YES), air conditioning controller 51 turns on compressor 38 (step ST403), performs refrigerant state determination control (step ST404), and finishes the normal driving determination control. The refrigerant state determination control refers to control of resolving stagnation of a refrigerant and control of detecting leakage of a refrigerant in a heat pump cycle. This control will be described in detail below.

In the case where driving of compressor 38 has not been permitted in step ST402 (step ST402: NO), air conditioning controller 51 sets the safety check flag to NG (step ST405) and finishes the normal driving determination control.

Thus, air conditioning controller 51 permits driving of compressor 38 at such a coolant temperature that the suction pressure of compressor 38 does not become a negative pressure, and does not permit driving of compressor 38 at such a coolant temperature that the suction pressure becomes a negative pressure. Thus, air conditioning controller 51 determines whether or not to permit driving of compressor 38 based on the coolant temperature which is correlated with the suction pressure of the refrigerant of compressor 38 without a sensor which detects a suction pressure. Consequently, it is possible to efficiently avoid that the suction pressure of compressor 38 becomes the negative pressure.

### <Refrigerant State Determination Control>

Next, the above-described refrigerant state determination control will be described.

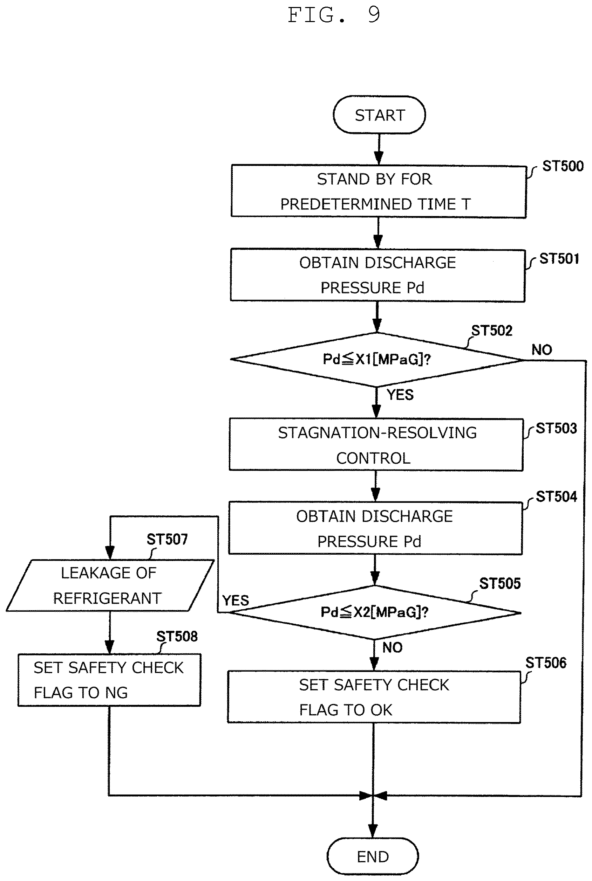

FIG. 9 is a flowchart illustrating a process of refrigerant state determination control illustrated in FIG. 8.

Air conditioning controller 51 stands by for predetermined time T after starting the refrigerant state determination control (step ST500). After the coolant is increased to such a temperature that the suction pressure does not become a negative pressure (step ST402: YES in FIG. 8), if compressor 38 is not driven for a predetermined time, the discharge pressure does not change. Hence, the refrigerant state determination control requires that compressor 38 is driven for predetermined time T. If compressor 38 is not driven for predetermined time T, in a pressure transient state, refrigerant leakage (step ST310) determination described below cannot be performed.

Air conditioning controller 51 obtains discharge pressure Pd of a refrigerant from discharge pressure sensor 17 (step ST501), and determines whether or not obtained discharge pressure Pd is predetermined threshold X1 [MPaG] or less (step ST502). In this regard, when discharge pressure Pd is threshold X1 or less, the refrigerant is likely to leak or stagnate. That is, threshold X1 is set to such a value that a refrigerant is likely to leak or stagnate.

When discharge pressure Pd exceeds threshold X1 (step ST502: NO), air conditioning controller 51 determines that the refrigerant is not likely to leak or stagnate, and finishes the refrigerant state determination control.

Meanwhile, when discharge pressure Pd is threshold X1 or less (step ST502: YES), air conditioning controller 51 determines that the refrigerant is likely to leak or stagnate, and performs stagnation-resolving control (step ST503).

Air conditioning controller 51 obtains discharge pressure Pd again from discharge pressure sensor 17 (step ST504), and determines whether or not obtained discharge pressure Pd is predetermined threshold X2 [MPaG] or less (step ST505). In addition, threshold X2 may take the same value as a value of threshold X1 and may take a different value.

When a predetermined time (a time of the stagnation-resolving control (step ST503)) passes after compressor 38 is driven, and then discharge pressure Pd exceeds threshold X2 (step ST505: NO), air conditioning controller 51 determines that the stagnation has been resolved, sets the safety check flag to OK (step ST506), and finishes the refrigerant state determination control. On the other hand, when a predetermined time (the time of the stagnation-resolving control (step ST503)) passes after compressor 38 is driven, and discharge pressure Pd is threshold X2 or less (step ST505: YES), air conditioning controller 51 determines that the refrigerant leaks since discharge pressure Pd does not rise even though the stagnation-resolving processing is performed, and stores refrigerant leakage information in a memory (step ST507). The stored refrigerant leakage information is read by air conditioning controller 51, and is used to process error notification.

Air conditioning controller 51 sets the safety check flag to NG (step ST508), and finishes the refrigerant state determination control.

Thus, air conditioning controller 51 determines that the refrigerant is likely to leak or stagnate when discharge pressure Pd of the refrigerant is threshold X1 or less. However, at this point of time, it is not possible to accurately distinguish whether stagnation has lowered the discharge pressure or leakage of the refrigerant has lowered the discharge pressure. Air conditioning controller 51 performs stagnation-resolving control in this state, and, when discharge pressure Pd is still threshold X2 or less even though the stagnation-resolving control is performed, air conditioning controller 51 determines that the refrigerant leaks. Consequently, it is possible to more accurately detect leakage of the refrigerant.

Thus, air conditioning device for vehicle 1 according to the first exemplary embodiment detects a temperature of a coolant which circulates in first water-refrigerant heat exchanger 11 and the cooling path of engine cooling portion 40 and is guided to first water-refrigerant heat exchanger 11, and determines whether or not to permit driving of compressor 38 based on the detected temperature of the coolant.

According to the above exemplary embodiment, driving of compressor 38 is permitted at such a coolant temperature that the suction pressure of compressor 38 does not become a negative pressure, and driving of compressor 38 is not permitted at such a coolant temperature that the suction pressure is a negative pressure. Consequently, a sensor which detects a suction pressure is not necessary.

Further, whether or not to permit driving of compressor 38 is determined based on a coolant temperature which is correlated with a suction pressure of the refrigerant of compressor 38. Consequently, it is possible to efficiently avoid that the suction pressure of compressor 38 becomes the negative pressure.

### SECOND EXEMPLARY EMBODIMENT

In an air conditioning device for vehicle which adopts a compressor as a common path and which switches between a heating refrigerant circuit and a cooling refrigerant circuit, refrigerant stagnation occurs in the cooling refrigerant circuit in heating. Therefore, the air conditioning device for vehicle needs to take a countermeasure for this stagnation (corresponding to stagnation-resolving control illustrated in FIG. 9 according to the first exemplary embodiment). This countermeasure will be more specifically described below. In addition, this countermeasure will be described below with reference to FIGS. 1 and 4 as preconditions used in the first exemplary embodiment.

### <Stagnation-Resolving Control Processing 1>

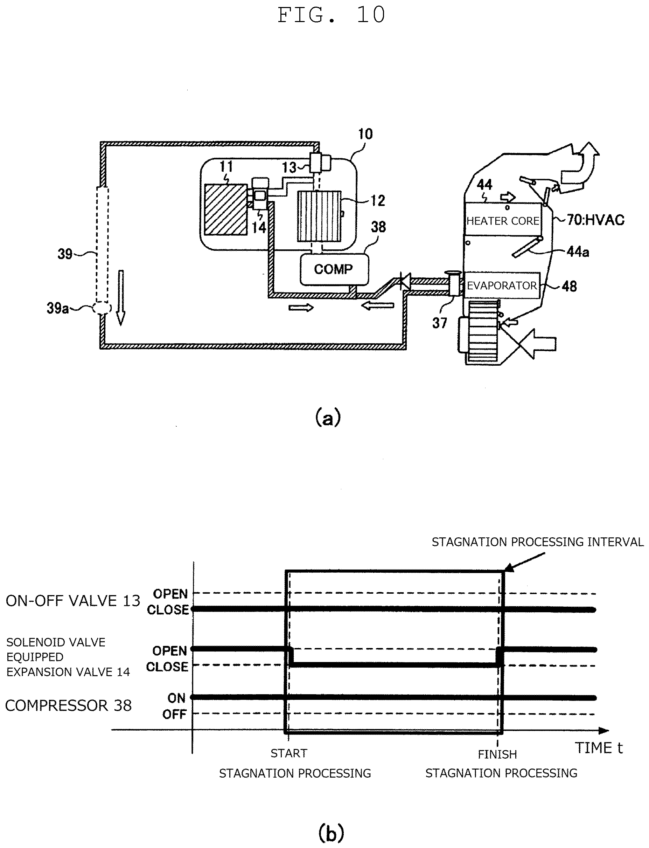

FIG. 10 is a diagram for illustrating stagnation-resolving control processing 1 according to the second exemplary embodiment of the present disclosure. According to stagnation-resolving control processing 1, air conditioning controller 51 in air conditioning device for vehicle 1 closes ON-OFF valve 13 and solenoid valve equipped expansion valve 14 in activation of a heat pump heating mode. FIG. 10(a) illustrates a refrigerant path (referred to as a "refrigerant stagnation-resolving refrigerant circuit" below). As is clear from FIG. 10(a), too, in the refrigerant stagnation-resolving refrigerant circuit, feeding of the refrigerant from second water-refrigerant heat exchanger 12 to outside condenser 39 and first water-refrigerant heat exchanger 11 is interrupted.

FIG. 10(b) illustrates that a timing of opening or closing ON-OFF valve 13 and solenoid valve equipped expansion valve 14 and turning on and off compressor 38. As illustrated in FIG. 10(b), in a stagnation processing interval from a start of stagnation processing to an end of the stagnation processing, air conditioning controller 51 closes ON-OFF valve 13 and solenoid valve equipped expansion valve 14 and turns on compressor 38. That is to say, the refrigerant stagnation-resolving refrigerant circuit illustrated in FIG. 10(a) is driven by compressor 38, so that it is possible to collect from a suction side the refrigerant which stagnates in first water-refrigerant heat exchanger 11 and second water-refrigerant heat exchanger 12. At a point of time at which the stagnation processing is finished, air conditioning controller 51 opens solenoid valve equipped expansion valve 14 to cause the refrigerant to flow in the refrigerant circuit passing through second water-refrigerant heat exchanger 12.

In addition, stagnation-resolving control processing 1 is effective at a start of driving of compressor 38 and in switching between cooling and heating.

### <Stagnation-Resolving Control Processing 2>

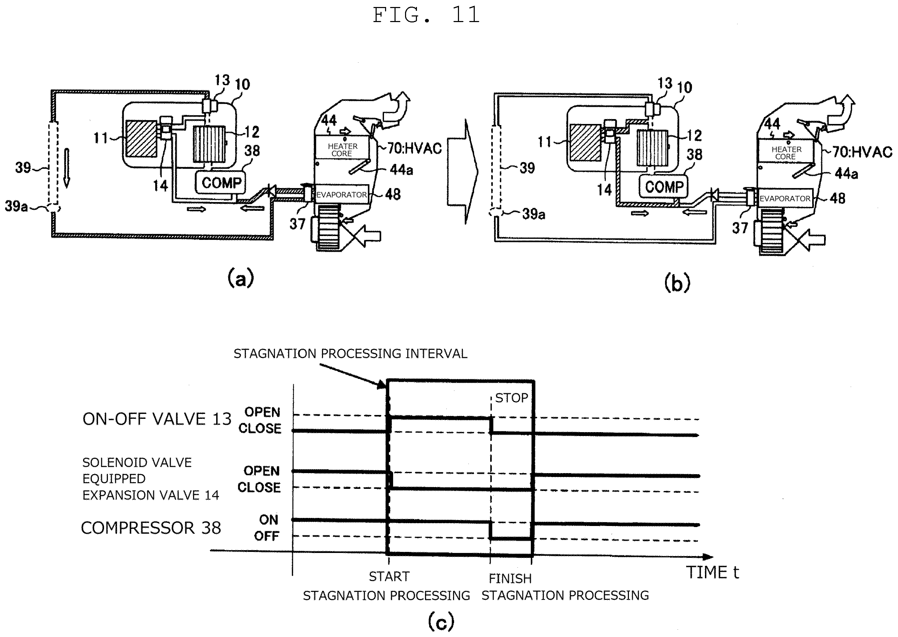

FIG. 11 is a diagram for illustrating stagnation-resolving control processing 2 according to the second exemplary embodiment of the present disclosure. According to stagnation-resolving control processing 2, in activation of a heat pump heating mode, air conditioning controller 51 in air conditioning device for vehicle 1 operates for a certain period of time a cooling mode in which a refrigerant flows to a cooling refrigerant circuit including outside condenser 39, compressor 38 and evaporator 48 as illustrated in FIG. 11(a). Consequently, it is possible to collect the refrigerant which stagnates in first water-refrigerant heat exchanger 11 and second water-refrigerant heat exchanger 12, from the suction side of compressor 38.

Subsequently, as illustrated in FIG. 11(b), air conditioning controller 51 switches a mode to a heat pump heating mode in which the refrigerant flows to the heating refrigerant circuit including second water-refrigerant heat exchanger 12, compressor 38, and first water-refrigerant heat exchanger 11.

FIG. 11(c) illustrates that a timing of opening or closing ON-OFF valve 13 and solenoid valve equipped expansion valve 14 and turning on and off the compressor. As illustrated in FIG. 11(c), at a point of time at which the stagnation processing starts, air conditioning controller 51 opens ON-OFF valve 13, closes solenoid valve equipped expansion valve 14, turns on compressor 38 and switches the mode to the cooling mode. Subsequently, at a point of time at which the stagnation processing is finished, air conditioning controller 51 closes ON-OFF valve 13, opens solenoid valve equipped expansion valve 14, turns on compressor 38, and switches the mode to the heat pump heating mode.

In addition, stagnation-resolving control processing 2 is effective at a start of driving of compressor 38.

Thus, according to the second exemplary embodiment, in activation of the heat pump heating mode, stagnation-resolving control processing 1 of driving compressor 38 in a state where a refrigerant discharge side of compressor 38 is interrupted is performed. Alternatively, in activation of the heat pump heating mode, stagnation-resolving control processing 2 of causing a refrigerant to flow to the cooling refrigerant circuit, driving compressor 38 and then causing the refrigerant to flow to the heating refrigerant circuit is performed. Consequently, it is possible to collect the refrigerant which stagnates in first water-refrigerant heat exchanger 11 and second water-refrigerant heat exchanger 12.

The exemplary embodiment of the present disclosure has been described above.

In addition, an example where the refrigerant circuit employs the configuration illustrated in FIG. 1 has been described in the above exemplary embodiments. However, the disclosure which prevents a suction pressure of a compressor from becoming a negative pressure is not limited to the configuration illustrated in FIG. 1, and only needs to adopt a refrigerant circuit including first water-refrigerant heat exchanger 11, compressor 38, heater core 44, temperature sensor 16, and air conditioning controller 51.

Further, the disclosure which resolves stagnation only needs to employ a configuration of switching between the cooling refrigerant circuit and the heating refrigerant circuit which shares the compressor with this cooling refrigerant circuit.

Furthermore, in the above exemplary embodiments, air conditioning controller 51 determines whether or not to permit driving of compressor 38 based on a temperature detected by temperature sensor 16. However, air conditioning controller 51 may estimate a refrigerant suction pressure of compressor 38 based on the temperature detected by temperature sensor 16, and determine whether or not to permit driving of compressor 38 based on this estimated refrigerant suction pressure. For example, air conditioning controller 51 determines permission of driving of compressor 38 when the estimated refrigerant suction pressure is a predetermined pressure or more.

Further, the engine has been described as an example of a heating component of the vehicle in the above exemplary embodiments. However, the heating component of the vehicle may adopt various heating components such as an electric motor of an electric vehicle for driving or a rechargeable battery which supplies power for driving.

### INDUSTRIAL APPLICABILITY

The present disclosure can be used for an air conditioning device for vehicle which is mounted on various vehicles such as engine cars, electric vehicles, or HEV cars.

### REFERENCE MARKS IN THE DRAWINGS

1 air conditioning device for vehicle
10 constituent unit
11 first water-refrigerant heat exchanger
12 second water-refrigerant heat exchanger
13 ON-OFF valve (first switch)
14 solenoid valve equipped expansion valve (second switch, ON-OFF function equipped expansion valve)
15 check valve
16 temperature sensor
17 discharge pressure sensor
18 outside air temperature sensor
37 expansion valve
38 compressor
39 outside condenser
40 engine cooling portion
44 heater core
44a door
48 evaporator
51 air conditioning controller
52 heat pump heating switch
53 A/C switch
70 HVAC

## Claims

1. An air conditioning device for vehicle, driven with coolant and refrigerant, the device comprising:
a first water-refrigerant heat exchanger (11) which performs a heat exchange between a coolant for heat transportation and a low-temperature and low-pressure refrigerant, and vaporizes the refrigerant;
a second water-refrigerant heat exchanger (12) which performs a heat exchange between a high-temperature and high-pressure refrigerant and the coolant for heat transportation, and condenses the refrigerant;
a compressor (38) which compresses the refrigerant to a high-temperature and high-pressure refrigerant, and discharges the refrigerant;
a heater core (44) which heats an interior of a vehicle by using heat of the high-temperature and high-pressure refrigerant discharged by the compressor (38);
an evaporator (48) which performs a heat exchange between a low-temperature and low-pressure refrigerant and suction air to be fed to an interior of a vehicle;
a condenser (39) which releases heat from the high-temperature and high-pressure refrigerant, and condenses the refrigerant;
a switch (13, 14) which can switch among a first state where the refrigerant flows to a first heating refrigerant circuit including the compressor (38), the second water-refrigerant heat exchanger (12), and the first water-refrigerant heat exchanger (11) in this order, and a second state where the refrigerant flows to a second heating refrigerant circuit including the compressor (38), the second water-refrigerant heat exchanger (12), the condenser (39), and the evaporator (48) in this order;
a temperature sensor (16) which detects a temperature of the coolant circulating in the first water-refrigerant heat exchanger (11) and a cooling path of a heat generating component (40) of the vehicle, the temperature being detected when the coolant flows in the first water refrigerant heat exchanger (11); and
a controller (51) which determines whether or not to permit driving of the compressor (38), based on the temperature detected by the temperature sensor (16).

2. The air conditioning device for vehicle according to claim 1, wherein, when the temperature detected by the temperature sensor (16) is a threshold or more, the controller (51) permits the driving of the compressor (38).

3. The air conditioning device for vehicle according to claim 2, further comprising a pressure sensor (17) which detects a discharge pressure of the high-temperature and high-pressure refrigerant discharged by the compressor (38),
wherein, when a predetermined time passes after the compressor (38) is driven and the discharge pressure detected by the pressure sensor (17) does not rise to a predetermined pressure, the controller (51) determines that there is leakage of the refrigerant.

4. The air conditioning device for vehicle according to claim 3, wherein the controller (51) performs refrigerant stagnation-resolving processing, and, when the discharge pressure detected by the pressure sensor (17) does not rise to the predetermined pressure after the refrigerant stagnation-resolving processing, the controller (51) determines that there is the leakage of the refrigerant.

5. The air conditioning device for vehicle according to any one of claims 1 to 4,
wherein
the second water-refrigerant heat exchanger (12) inputs the coolant from the cooling path of the heat generating component (40), feeds the coolant to the heater core (44) and guides the high-temperature and high-pressure refrigerant discharged by the compressor (38), and
the heater core (44) heats an air-blast to the interior of the vehicle by using the coolant fed by the second water-refrigerant heat exchanger (12).

6. The air conditioning device for vehicle according to any one of claims 1 to 5, wherein the temperature sensor (16) detects the temperature of the coolant guided to the first water-refrigerant heat exchanger (11).

7. The air conditioning device for vehicle according to claim 1,
wherein the switch (13, 14) can switch among the first and second state and a third state of a refrigerant stagnation-resolving refrigerant circuit in which the feeding of the refrigerant from the second water-refrigerant heat exchanger (12) to the condenser (39) and the first water-refrigerant heat exchanger (11) is interrupted, and
the controller (51) performs refrigerant stagnation-resolving processing of switching the switch (13, 14) such that the refrigerant flows to the refrigerant stagnation-resolving refrigerant circuit, in activation of a heat pump heating mode where the second water-refrigerant heat exchanger (12) heats the coolant to heat the interior of the vehicle.

8. The air conditioning device for vehicle according to claim1,
wherein the controller (51) performs refrigerant stagnation-resolving processing of switching the switch (13, 14) such that the refrigerant flows to the cooling refrigerant circuit, driving the compressor (38), and then switching the switch (13, 14) such that the refrigerant flows to the heating refrigerant circuit, in activation of a heat pump heating mode where the second water-refrigerant heat exchanger (12) heats the coolant to heat the interior of the vehicle.

9. The air conditioning device for vehicle according to claim 1 further comprising:
an air conditioning switch (53) which can be operated by a user;
a heat pump heating switch (52) which can be operated by the user,
wherein the controller (51)
receives an air conditioning control signal from an HVAC (Heating, Ventilation, and Air Conditioning) (70)
switches the switch (13, 14) such that the refrigerant flows to the cooling refrigerant circuit when the air conditioning switch (53) is switched to on,
switches the switch (13, 14) such that the refrigerant flows to the heating refrigerant circuit when the air conditioning switch (53) is switched to off, the heat pump heating switch (52) is switched to on, and the air conditioning control signal indicates that a mix door (44) of the HVAC (70) is full-hot, and
switches the switch (13, 14) such that the refrigerant flows to the cooling refrigerant circuit when the air conditioning switch (53) is switched to on and the heat pump heating switch (52) is switched to off.

10. The air conditioning device for vehicle according to claim 1 further comprising:
an air conditioning switch (53) which can be operated by a user;
a heat pump heating switch (52) which can be operated by the user; and
an outside air temperature sensor (18) which detects an air temperature outside of the vehicle,
wherein, when the air conditioning switch (53) is switched to on and the heat pump heating switch (52) is switched to on, the controller (51) determines whether to switch the switch (13, 14) such that the refrigerant flows to the cooling refrigerant circuit or the heating refrigerant circuit based on the temperature detected by the outside air temperature sensor (18).

11. The air conditioning device for vehicle according to claim 10, wherein the controller (51)
determines to switch the switch (13, 14) such that the refrigerant flows to the cooling refrigerant circuit when the air temperature detected by the outside air temperature sensor (18) is a first predetermined value or more, and
determines to switch the switch (13, 14) such that the refrigerant flows to the heating refrigerant circuit when the air temperature detected by the outside air temperature sensor (18) is less than a second predetermined value smaller than the first predetermined value.

## Patentansprüche

1. Klimatisierungsvorrichtung für ein Fahrzeug, die mit einem Kühlmittel und einer Kühlflüssigkeit betrieben wird, wobei die Vorrichtung umfasst:
einen ersten Wasser-Kühlflüssigkeit-Wärmetauscher (11), der einen Wärmeaustausch zwischen einem Kühlmittel zum Wärmetransport und einer Niedertemperatur- und Niederdruckkühlflüssigkeit durchführt und die Kühlflüssigkeit verdampft;
einen zweiten Wasser-Kühlflüssigkeit-Wärmetauscher (12), der einen Wärmeaustausch zwischen einer Hochtemperatur- und Hochdruckkühlflüssigkeit und dem Kühlmittel zum Wärmetransport durchführt und die Kühlflüssigkeit kondensiert;
einen Kompressor (38), der die Kühlflüssigkeit zu einer Hochtemperatur- und Hochdruckkühlflüssigkeit komprimiert und die Kühlflüssigkeit ausgibt;
einen Heizkern (44), der ein Inneres eines Fahrzeugs durch Verwendung von Wärme der Hochtemperatur- und Hochdruckkühlflüssigkeit erwärmt, die von dem Kompressor (38) ausgegeben wird;
einen Verdampfer (48), der einen Wärmeaustausch zwischen einer Niedertemperatur- und Niederdruckkühlflüssigkeit und Ansaugluft durchführt, die einem Innenraum eines Fahrzeugs zugeführt werden soll;
einen Kondensator (39), der Wärme von der Hochtemperatur- und Hochdruckkühlflüssigkeit freisetzt und die Kühlflüssigkeit kondensiert;
einen Schalter (13, 14), der zwischen einem ersten Zustand, in dem die Kühlflüssigkeit zu einem ersten Kühlflüssigkeitserwärmungskreislauf strömt, der den Kompressor (38), den zweiten Wasser-Kühlflüssigkeit-Wärmetauscher (12) und den ersten Wasser-Kühlflüssigkeit-Wärmetauscher (11) in dieser Reihenfolge aufweist, und einen zweiten Zustand umschalten kann, in dem die Kühlflüssigkeit zu einem zweiten Kühlflüssigkeitserwärmungskreislauf strömt, der den Kompressor (38), den zweiten Wasser-Kühlflüssigkeit-Wärmetauscher (12), den Kondensator (39) und den Verdampfer (48) in dieser Reihenfolge aufweist;
einen Temperatursensor (16), der eine Temperatur des in dem ersten Wasser-Kühlflüssigkeit-Wärmetauscher (11) und einer Kühlstrecke einer Wärmeerzeugungskomponente (40) des Fahrzeugs zirkulierenden Kühlmittels erfasst, wobei die Temperatur erfasst wird, wenn das Kühlmittel in dem ersten Wasser-Kühlflüssigkeit-Wärmetauscher (11) strömt; und
eine Steuerungseinheit (51), die auf der Basis der durch den Temperatursensor (16) erfassten Temperatur bestimmt, ob das Ansteuern des Kompressors (38) zugelassen wird oder nicht.

2. Klimatisierungsvorrichtung für ein Fahrzeug nach Anspruch 1, wobei, wenn die durch den Temperatursensor (16) erfasste Temperatur ein Schwellenwert oder mehr ist, die Steuerungseinheit (51) das Ansteuern des Kompressors (38) zulässt.

3. Klimatisierungsvorrichtung für ein Fahrzeug nach Anspruch 2, die des Weiteren einen Drucksensor (17) umfasst, der einen Ausgabedruck der von dem Kompressor (38) ausgegebenen Hochtemperatur- und Hochdruckkühlflüssigkeit erfasst,
wobei, wenn eine vorgegebene Zeit vergeht, nachdem der Kompressor (38) angesteuert wurde und der durch den Drucksensor (17) erfasste Ausgabedruck nicht auf einen vorgegebenen Druck ansteigt, die Steuerungseinheit (51) bestimmt, dass ein Austreten der Kühlflüssigkeit vorliegt.

4. Klimatisierungsvorrichtung für ein Fahrzeug nach Anspruch 3, wobei die Steuerungseinheit (51) eine Stillstandslösungsverarbeitung der Kühlflüssigkeit durchführt und die Steuerungseinheit (51) bestimmt, dass ein Austreten der Kühlflüssigkeit vorliegt, wenn der durch den Drucksensor erfasste Ausgabedruck nicht auf den vorgegebenen Druck nach der Stillstandslösungsverarbeitung der Kühlflüssigkeit ansteigt.

5. Klimatisierungsvorrichtung für ein Fahrzeug nach einem der Ansprüche 1 bis 4, wobei
der zweite Wasser-Kühlflüssigkeit-Wärmetauscher (12) das Kühlmittel von der Kühlstrecke der Wärmeerzeugungskomponente (40) eingibt, das Kühlmittel dem Heizkern (44) zuführt und die von dem Kompressor (38) ausgegebene Hochtemperatur- und Hochdruckkühlflüssigkeit führt, und
der Heizkern (44) einen Luftstoß in das Innere des Fahrzeugs durch Verwendung des vom Wasser-Kühlflüssigkeit-Wärmetauscher (12) zugeführten Kühlmittels erwärmt.

6. Klimatisierungsvorrichtung für ein Fahrzeug nach einem der Ansprüche 1 bis 5, wobei der Temperatursensor (16) die Temperatur des zu dem ersten Wasser-Kühlflüssigkeit-Wärmetauscher (11) geführten Kühlmittels erfasst.

7. Klimatisierungsvorrichtung für ein Fahrzeug nach Anspruch 1,
wobei der Schalter (13, 14) zwischen dem ersten und zweiten Zustand und einem dritten Zustand eines Kühlflüssigkeitskreislaufs zur Stillstandslösung der Kühlflüssigkeit umschalten kann, in dem das Zuführen der Kühlflüssigkeit von dem zweiten Wasser-Kühlflüssigkeit-Wärmetauscher (12) zu dem Kondensator (39) und dem ersten Wasser-Kühlflüssigkeit-Wärmetauscher (11) unterbrochen wird, und
die Steuerungseinheit (51) die Stillstandslösungsverarbeitung der Kühlflüssigkeit zum Umschalten des Schalters (13, 14) so durchführt, dass die Kühlflüssigkeit zum Kühlflüssigkeitskreislauf der Stillstandslösung der Kühlflüssigkeit bei Aktivierung eines Wärmepumpenheizmodus strömt, in dem der zweite Wasser-Kühlflüssigkeit-Wärmetauscher (12) das Kühlmittel erwärmt, um das Innere des Fahrzeugs zu erwärmen.

8. Klimatisierungsvorrichtung für ein Fahrzeug nach Anspruch 1,
wobei die Steuerungseinheit (51) die Stillstandslösungsverarbeitung der Kühlflüssigkeit zum Umschalten des Schalters (13, 14), so dass die Kühlflüssigkeit zum Kältekühlflüssigkeitskreislauf strömt, Ansteuern des Kompressors (38) und dann Umschalten des Schalters (13, 14) so durchführt, dass die Kühlflüssigkeit zum Heizkühlflüssigkeitskreislauf bei Aktivierung eines Wärmepumpenheizmodus strömt, in dem der zweite Wasser-Kühlflüssigkeit-Wärmetauscher (12) das Kühlmittel erwärmt, um das Innere des Fahrzeugs zu erwärmen.

9. Klimatisierungsvorrichtung für ein Fahrzeug nach Anspruch 1, die des Weiteren umfasst:
einen Klimaanlagenschalter (53), der von einem Benutzer bedient werden kann;
einen Wärmepumpenheizschalter (52), der vom Benutzer bedient werden kann;
wobei die Steuerungseinheit (51)
ein Klimaanlagensteuersignal von einem Heizungs-, Lüftungs- und Klimatisierungssystem (Heating, Ventilation and Air Conditioning - HVAC) (70) empfängt,
den Schalter (13, 14) so schaltet, dass die Kühlflüssigkeit zu dem Kältekühlflüssigkeitskreislauf strömt, wenn der Klimaanlagenschalter (53) auf EIN geschaltet ist,
den Schalter (13, 14) so schaltet, dass die Kühlflüssigkeit zu dem Heizkühlflüssigkeitskreislauf strömt, wenn der Klimaanlagenschalter (53) auf AUS geschaltet ist, der Wärmepumpenheizschalter (52) auf EIN geschaltet ist und das Klimaanlagensteuersignal anzeigt, dass eine Mischklappe des HVAC voll auf heiß ist, und
den Schalter (13, 14) so schaltet, dass die Kühlflüssigkeit zu dem Kältekühlflüssigkeitskreislauf strömt, wenn der Klimaanlagenschalter (53) auf EIN geschaltet ist und der Wärmepumpenheizschalter (52) auf AUS geschaltet ist.

10. Klimatisierungsvorrichtung für ein Fahrzeug nach Anspruch 1, die des Weiteren umfasst:
einen Klimaanlagenschalter (53), der von einem Benutzer bedient werden kann;
einen Wärmepumpenheizschalter (52), der vom Benutzer bedient werden kann; und
einen Außenlufttemperatursensor (18), der eine Lufttemperatur außerhalb des Fahrzeugs erfasst,
wobei, wenn der Klimaanlagenschalter (53) auf EIN geschaltet ist und der Wärmepumpenheizschalter (52) auf EIN geschaltet ist, die Steuerungseinheit (51) auf der Basis der durch den Außenlufttemperatursensor (18) erfassten Temperatur bestimmt, ob der Schalter so geschaltet wird, dass die Kühlflüssigkeit zu dem Kältekühlflüssigkeitskreislauf oder dem Heizkühlflüssigkeitskreislauf strömt.

11. Klimatisierungsvorrichtung für ein Fahrzeug nach Anspruch 10, wobei die Steuerungseinheit (51)
bestimmt, den Schalter (13, 14) so zu schalten, dass die Kühlflüssigkeit zu dem Kältekühlflüssigkeitskreislauf strömt, wenn die durch den Außenlufttemperatursensor (18) erfasste Lufttemperatur ein erster vorgegebener Wert oder mehr ist, und
bestimmt, den Schalter so zu schalten, dass die Kühlflüssigkeit zu dem Heizkühlflüssigkeitskreislauf strömt, wenn die durch den Außenlufttemperatursensor (18) erfasste Lufttemperatur weniger ist als ein zweiter vorgegebener Wert, der kleiner ist als der erste vorgegebene Wert.

## Revendications

1. Dispositif de climatisation pour véhicule, entraîné avec un fluide caloporteur et un fluide frigorigène, le dispositif comprenant :
un premier échangeur de chaleur eau-fluide frigorigène (11) qui effectue un échange de chaleur entre un fluide caloporteur pour le transport de chaleur et un fluide frigorigène à basse température et à basse pression, et vaporise le fluide frigorigène ;
un second échangeur de chaleur eau-fluide frigorigène (12) qui effectue un échange de chaleur entre un fluide frigorigène à haute température et à haute pression et le fluide caloporteur pour le transport de chaleur, et condense le fluide frigorigène ;
un compresseur (38) qui comprime le fluide frigorigène en un fluide frigorigène à haute température et à haute pression, et refoule le fluide frigorigène ;
un radiateur de chauffage (44) qui chauffe un intérieur d'un véhicule en utilisant la chaleur du fluide frigorigène à haute température et à haute pression refoulé par le compresseur (38) ;
un évaporateur (48) qui effectue un échange de chaleur entre un fluide frigorigène à basse température et à basse pression et de l'air d'aspiration destiné à être fourni à un intérieur d'un véhicule ;
un condenseur (39) qui libère de la chaleur à partir du fluide frigorigène à haute température et à haute pression, et condense le fluide frigorigène ;
un commutateur (13, 14) qui peut commuter entre un premier état où le fluide frigorigène s'écoule vers un premier circuit de fluide frigorigène de chauffage incluant le compresseur (38), le second échangeur de chaleur eau-fluide frigorigène (12), et le premier échangeur de chaleur eau-fluide frigorigène (11) dans cet ordre, et un deuxième état où le fluide frigorigène s'écoule vers un second circuit de fluide frigorigène de chauffage incluant le compresseur (38), le second échangeur de chaleur eau-fluide frigorigène (12), le condenseur (39), et l'évaporateur (48) dans cet ordre ;
un capteur de température (16) qui détecte une température du fluide caloporteur circulant dans le premier échangeur de chaleur eau-fluide frigorigène (11) et un chemin de refroidissement d'un composant thermogène (40) du véhicule, la température étant détectée lorsque le fluide caloporteur s'écoule dans le premier échangeur de chaleur eau-fluide frigorigène (11) ; et
une unité de commande (51) qui détermine s'il faut ou non permettre l'entraînement du compresseur (38), sur la base de la température détectée par le capteur de température (16).

2. Dispositif de climatisation pour véhicule selon la revendication 1, dans lequel, lorsque la température détectée par le capteur de température (16) est égale ou supérieure à un seuil, l'unité de commande (51) permet l'entraînement du compresseur (38).

3. Dispositif de climatisation pour véhicule selon la revendication 2, comprenant en outre un capteur de pression (17) qui détecte une pression de refoulement du fluide frigorigène à haute température et à haute pression refoulé par le compresseur (38),
dans lequel, lorsqu'un temps prédéterminé se passe après que le compresseur (38) est entraîné et la pression de refoulement détectée par le capteur de pression (17) n'augmente pas jusqu'à une pression prédéterminée, l'unité de commande (51) détermine qu'une fuite du fluide frigorigène existe.

4. Dispositif de climatisation pour véhicule selon la revendication 3, dans lequel l'unité de commande (51) effectue un traitement de résolution de stagnation de fluide frigorigène, et, lorsque la pression de refoulement détectée par le capteur de pression (17) n'augmente pas jusqu'à la pression prédéterminée après le traitement de résolution de stagnation de fluide frigorigène, l'unité de commande (51) détermine que la fuite du fluide frigorigène existe.

5. Dispositif de climatisation pour véhicule selon l'une quelconque des revendications 1 à 4, dans lequel
le second échangeur de chaleur eau-fluide frigorigène (12) fait entrer le fluide caloporteur à partir du chemin de refroidissement du composant thermogène (40), fournit le fluide caloporteur au radiateur de chauffage (44) et guide le fluide frigorigène à haute température et à haute pression refoulé par le compresseur (38), et
le radiateur de chauffage (44) chauffe un courant d'air vers l'intérieur du véhicule en utilisant le fluide caloporteur fourni par le second échangeur de chaleur eau-fluide frigorigène (12).

6. Dispositif de climatisation pour véhicule selon l'une quelconque des revendications 1 à 5, dans lequel le capteur de température (16) détecte la température du fluide caloporteur guidé vers le premier échangeur de chaleur eau-fluide frigorigène (11).

7. Dispositif de climatisation pour véhicule selon la revendication 1,
dans lequel le commutateur (13, 14) peut commuter entre les premier et deuxième états et un troisième état d'un circuit de fluide frigorigène de résolution de stagnation de fluide frigorigène dans lequel la fourniture du fluide frigorigène du second échangeur de chaleur eau-fluide frigorigène (12) au condenseur (39) et au premier échangeur de chaleur eau-fluide frigorigène (11) est interrompue, et
l'unité de commande (51) effectue un traitement de résolution de stagnation de fluide frigorigène de la commutation du commutateur (13, 14) de telle sorte que le fluide frigorigène s'écoule vers le circuit de fluide frigorigène de résolution de stagnation de fluide frigorigène, dans l'activation d'un mode de chauffage à pompe à chaleur où le second échangeur de chaleur eau-fluide frigorigène (12) chauffe le fluide caloporteur pour chauffer l'intérieur du véhicule.

8. Dispositif de climatisation pour véhicule selon la revendication 1,
dans lequel l'unité de commande (51) effectue un traitement de résolution de stagnation de fluide frigorigène de la commutation du commutateur (13, 14) de telle sorte que le fluide frigorigène s'écoule vers le circuit de fluide frigorigène de refroidissement, de l'entraînement du compresseur (38), et puis de la commutation du commutateur (13, 14) de telle sorte que le fluide frigorigène s'écoule vers le circuit de fluide frigorigène de chauffage, dans l'activation d'un mode de chauffage à pompe à chaleur où le second échangeur de chaleur eau-fluide frigorigène (12) chauffe le fluide caloporteur pour chauffer l'intérieur du véhicule.

9. Dispositif de climatisation pour véhicule selon la revendication 1, comprenant en outre :
un interrupteur de climatisation (53) qui peut être actionné par un utilisateur ;
un interrupteur de chauffage à pompe à chaleur (52) qui peut être actionné par l'utilisateur,
dans lequel l'unité de commande (51)
reçoit un signal de commande de climatisation à partir d'un HVAC (« Heating, Ventilation, and Air Conditioning » ou système de chauffage, de ventilation et de climatisation) (70),
commute le commutateur (13, 14) de telle sorte que le fluide frigorigène s'écoule vers le circuit de fluide frigorigène de refroidissement lorsque l'interrupteur de climatisation (53) est mis en fonctionnement,
commute le commutateur (13, 14) de telle sorte que le fluide frigorigène s'écoule vers le circuit de fluide frigorigène de chauffage lorsque l'interrupteur de climatisation (53) est mis hors de fonctionnement, l'interrupteur de chauffage à pompe à chaleur (52) est mis en fonctionnement, et le signal de commande de climatisation indique qu'un clapet de mélange (44) du HVAC (70) est entièrement chaud, et
commute le commutateur (13, 14) de telle sorte que le fluide frigorigène s'écoule vers le circuit de fluide frigorigène de refroidissement lorsque l'interrupteur de climatisation (53) est mis en fonctionnement et l'interrupteur de chauffage à pompe à chaleur (52) est mis hors de fonctionnement.

10. Dispositif de climatisation pour véhicule selon la revendication 1, comprenant en outre :
un interrupteur de climatisation (53) qui peut être actionné par un utilisateur ;
un interrupteur de chauffage à pompe à chaleur (52) qui peut être actionné par l'utilisateur ; et
un capteur de température d'air extérieur (18) qui détecte une température d'air à l'extérieur du véhicule,
dans lequel, lorsque l'interrupteur de climatisation (53) est mis en fonctionnement et l'interrupteur de chauffage à pompe à chaleur (52) est mis en fonctionnement, l'unité de commande (51) détermine s'il faut ou non commuter le commutateur (13, 14) de telle sorte que le fluide frigorigène s'écoule vers le circuit de fluide frigorigène de refroidissement ou le circuit de fluide frigorigène de chauffage sur la base de la température détectée par le capteur de température d'air extérieur (18).

11. Dispositif de climatisation pour véhicule selon la revendication 10, dans lequel l'unité de commande (51)
détermine de commuter le commutateur (13, 14) de telle sorte que le fluide frigorigène s'écoule vers le circuit de fluide frigorigène de refroidissement lorsque la température d'air détectée par le capteur de température d'air extérieur (18) est égale ou supérieure à une première valeur prédéterminée, et
détermine de commuter le commutateur (13, 14) de telle sorte que le fluide frigorigène s'écoule vers le circuit de fluide frigorigène de chauffage lorsque la température d'air détectée par le capteur de température d'air extérieur (18) est inférieure à une seconde valeur prédéterminée inférieure à la première valeur prédéterminée.
